# EUROPÄISCHE PATENTSCHRIFT

(11) **EP 3 743 980 B1**
(45) Veröffentlichungstag und Bekanntmachung des Hinweises auf die Patenterteilung: **03.07.2024**
(21) Anmeldenummer: 19701328.7
(22) Anmeldetag: 18.01.2019
(51) Int. Cl.: H02J 9/06, H01H 9/54

(54) **UMSCHALTVORRICHTUNG**
CHANGEOVER APPARATUS
DISPOSITIF DE COMMUTATION

(30) Priorität: 22.01.2018 DE 102018101310
(43) Veröffentlichungstag der Anmeldung: 02.12.2020
(73) Patentinhaber: Eaton Intelligent Power Limited, Dublin 4 (IE)
(72) Erfinder: ASKAN, Kenan, 1090 Wien (AT)
(74) Vertreter: Epping - Hermann - Fischer
(86) Internationale Anmeldenummer: PCT/EP2019/051302
(87) Internationale Veröffentlichungsnummer: WO 2019/141829

(56) Entgegenhaltungen:
- GB-A- 2 221 794
- US-A- 6 051 893
- US-A1- 2002 074 863
- US-A1- 2008 185 914
- US-A1- 2010 264 743
- US-A1- 2016 203 932
- US-B1- 6 465 911

## Beschreibung

Die Erfindung betrifft eine Umschaltvorrichtung gemäß dem Oberbegriff des Patentanspruches 1.

Es ist bekannt elektrische Anlagen mit einem oder mehrere zusätzlichen Stromversorgungssystemen gegen den Ausfall der Hauptstromversorgung abzusichern. Beispiele für derartige zusätzliche Stromversorgungssysteme sind etwa Batteriesysteme und/oder Dieselgeneratoren.

Derzeit sind vor allem sog. "static transfer switches" geläufig. Dabei handelt es sich um mechanische Umschaltrelais. Diese weisen zwar einen geringen Durchgangswiderstand auf, was im Betrieb Vorteile hat, jedoch sind gleichzeitig die Umschaltzeiten derart lang, dass es zu einem Ausfall einer versorgungskritischen Last kommen kann.

Weiters sind sog. Solid-State-Umschalter bekannt. Dabei handelt es sich um reine Halbleiterumschalter. Derartige Solid State Lösungen weisen den Vorteil eines sehr schnellen, unterbrechungsfreien Umschaltens auf. Allerdings befindet sich je umzuschaltender Energiequelle wenigstens ein Leistungshalbleiter, etwa ein Thyristor, im Strompfad. Da es sich dabei um Notfallsysteme handelt, müssen die entsprechenden Komponenten, welche den Notfallbetrieb gewährleisten sollen, ständig in Betrieb bzw. betriebsbereit sein. Die erforderlichen Leistungshalbleiter befinden sich daher ständig im durchgeschalteten Zustand in den elektrischen Zuleitungen. Diese weisen einen nicht unerheblichen elektrischen Widerstand auf, welcher zu einer erheblichen Erwärmung führen kann. Neben den erforderlichen Maßnahmen um diese Wärme abzuführen, verringert die dennoch erhöhte Umgebungstemperatur an den Halbleitern deren Lebensdauer. Die entstehende Wärme ist dabei meist derart groß, dass passive Kühlung nicht mehr ausreichend ist, und Ventilatoren bzw. Flüssigkeitskühlung erforderlich ist. Dadurch sind derartige Anlagen meist sehr voluminös, aufwendig, kostenintensiv und verursachen Lärm. Solid-State-Umschalter werden oftmals in Kombination mit sog. "Offline UPS" eingesetzt.

Bei besonders sensitiven Lasten ist zudem eine exakte Synchronisierung der Netzspannung erforderlich. Derartige Systeme weisen daher in der Regel einen Gleichrichter und einen Wechselrichter auf, wodurch diese noch aufwendiger sind. Dies wird auch als "Double Conversion" bezeichnet.

Die US 6 051 893 beschreibt ein elektrisches Stromversorgungssystem für eine Last. Dabei sind zwei unterschiedliche elektrische Quellen vorgesehen, welche jeweils separat mit der Last verschaltet werden können.

Die GB 2 221 794 beschreibt eine sehr schemenhafte Ausführungsform eines Schutzschalters mit einem mechanischen Schalter, welcher parallel zu einem Halbleiter angeordnet ist.

Die US 2008/0185914 A1 beschreibt eine Energieversorgungseinheit, welche die PWM Technik nutzt.

Aufgabe der Erfindung ist es daher eine Umschaltvorrichtung der eingangs genannten Art anzugeben, mit welcher die genannten Nachteile vermieden werden können, welche wenig Bauraum beansprucht, einen einfachen Aufbau, eine geringe Eigenerwärmung und eine lange Lebensdauer aufweist.

Erfindungsgemäß wird dies durch die Merkmale des Patentanspruches 1 erreicht.

Dadurch kann eine Umschaltvorrichtung geschaffen werden, welche einen geringen Innenwiderstand aufweist. Dadurch weist diese auch eine geringe Eigenerwärmung auf. Die entstehende Wärme kann einfach über passive Kühlelemente aus dem Gehäuse abgeführt werden, ohne dass hiezu zusätzliche Elemente, wie insbesondere Ventilatoren, erforderlich wären. Dadurch kommt es nicht zu einer Entwicklung von Geräuschen bzw. Vibrationen. Durch die geringe Erwärmung weisen die beteiligten Halbleiter eine hohe Lebensdauer auf. Durch den Verzicht auf aufwendige Kühlmaßnahmen kann ein technisch einfacher Aufbau erreicht werden, welcher einfach herstellbar ist, und ein geringes Volumen beansprucht.

Eine gegenständliche Umschaltvorrichtung kann auch als Schutzschalter verwendet werden, wodurch auf einen weiteren separaten Schutzschalter bzw. eine Sicherung verzichtet werden kann.

Eine gegenständliche Umschaltvorrichtung kann weiters zum Anfahren einer leistungsstarken Last mit einem hohen Einschaltstrom verwendet werden, etwa um einen Elektromotor zu starten, wodurch auf ein weiters entsprechendes und separates Gerät verzichtet werden kann.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste Ausführungsform einer gegenständlichen Umschaltvorrichtung in schematischer Darstellung; und
Fig. 2 eine zweite Ausführungsform einer gegenständlichen Umschaltvorrichtung in schematischer Darstellung.

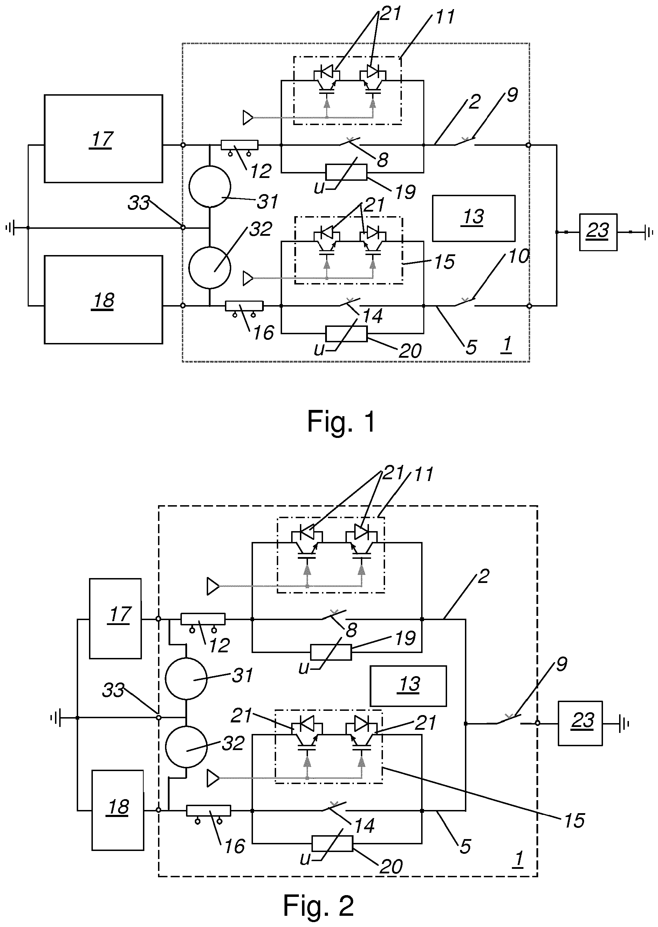

Die Fig. 1 und 2 zeigen jeweils eine Umschaltvorrichtung 1 zum unterbrechungsfreien Umschalten zwischen zwei Energieversorgungssystemen 17, 18, wobei die Umschaltvorrichtung 1 zumindest eine erste Außenleiterstrecke 2 und eine zweite Außenleiterstrecke 5 aufweist, wobei in der ersten Außenleiterstrecke 2 ein erster mechanischer Bypassschalter 8 angeordnet ist, wobei eine erste Halbleiterschaltungsanordnung 11 der Umschaltvorrichtung 1 parallel zum ersten Bypassschalter 8 geschaltet ist, wobei die Umschaltvorrichtung 1 eine erste Messeinrichtung 31 zur Aufnahme einer ersten Spannung und/oder einer ersten Netzfrequenz aufweist, welche erste Messeinrichtung 31 mit der ersten Außenleiterstrecke 2 verbunden ist, wobei in der zweiten Außenleiterstrecke 5 ein zweiter mechanischer Bypassschalter 14 angeordnet ist, wobei eine zweite Halbleiterschaltungsanordnung 15 der Umschaltvorrichtung 1 parallel zum zweiten Bypassschalter 14 geschaltet ist, wobei eine elektronische Steuereinheit 13 der Umschaltvorrichtung 1 dazu ausgebildet ist, den ersten Bypassschalter 8, die erste Halbleiterschaltungsanordnung 11, den zweiten Bypassschalter 14 und die zweite Halbleiterschaltungsanordnung 15 vorgebbar zu betätigen, wobei die erste Messeinrichtung 31 zur Übertragung erster Spannungsmesssignale und/oder erster Netzfrequenzmesssignale mit der Steuereinheit 13 nachrichtentechnisch verbunden ist, wobei die Steuereinheit 13 dazu ausgebildet ist, die ersten Spannungsmesssignale und/oder die ersten Netzfrequenzmesssignale mit wenigstens einem ersten Energieversorgungssystem-Wechselkriterium zu vergleichen, wobei die Steuereinheit 13 weiters dazu ausgebildet ist, bei Erfüllung des ersten Energieversorgungssystem-Wechselkriteriums zuerst die erste Außenleiterstrecke 2 auszuschalten und unmittelbar anschließend die zweite Außenleiterstrecke 5 einzuschalten. Während des Umschaltens sind eventuelle bzw. bevorzugt vorhandene Trennschalter 9, 10 geschlossen.

Dadurch kann eine Umschaltvorrichtung 1 geschaffen werden, welche einen geringen Innenwiderstand aufweist. Dadurch weist diese auch eine geringe Eigenerwärmung auf. Die entstehende Wärme kann einfach über passive Kühlelemente aus dem Gehäuse abgeführt werden, ohne dass hiezu zusätzliche Elemente, wie insbesondere Ventilatoren, erforderlich wären. Dadurch kommt es nicht zu einer Entwicklung von Geräuschen bzw. Vibrationen. Durch die geringe Erwärmung weisen die beteiligten Halbleiter eine hohe Lebensdauer auf. Durch den Verzicht auf aufwendige Kühlmaßnahmen kann ein technisch einfacher Aufbau erreicht werden, welcher einfach herstellbar ist, und ein geringes Volumen beansprucht.

Eine gegenständliche Umschaltvorrichtung 1 kann auch eine Schutzschalterfunktion aufweisen, wodurch auf einen weiteren separaten Schutzschalter bzw. eine Sicherung verzichtet werden kann.

Eine gegenständliche Umschaltvorrichtung 1 kann weiters zum Anfahren einer leistungsstarken Last 23 mit einem hohen Einschaltstrom verwendet werden, etwa um einen Elektromotor zu starten, wodurch auf ein weiters separates Gerät verzichtet werden kann.

Dadurch können vielfältige elektrische Funktionen zum Betrieb und der Absicherung elektrischer Anlagen mit nur einer Vorrichtung durchgeführt werden.

Die gegenständliche Umschaltvorrichtung 1 ist dazu vorgesehen zwischen zumindest zwei unterschiedlichen und in der Regel voneinander unabhängigen Energieversorgungssystemen 17, 18 und zumindest einer Last 23 bzw. einer nachgeschalteten Installationsumgebung angeordnet zu werden. Bei dem ersten und zweiten Energieversorgungssystem 17, 18 kann es sich um jedes beliebige Energieversorgungssystem 17, 18 handeln, insbesondere umfassend zumindest einen Netzanschluss, ein Stromaggregat, ein Batteriespeichersystem usw. Die Umschaltvorrichtung 1 verbindet im Regelbetrieb das erste Energieversorgungssystem 17 mit der Last 23. Dabei können noch weitere elektrotechnische Komponenten zwischen den Energieversorgungssystemen 17, 18 und der Last 23 angeordnet sein, beispielsweise ein Fehlerstromschutzschalter und/oder dergleichen. Insbesondere bei Ausbildung des zweiten Energieversorgungssystems 18 als Akkumulator kann vorgesehen sein, dass dieser, zu dessen ständiger Ladung eingangseitig mit dem ersten Energieversorgungssystem 17 verbunden ist.

Die Umschaltvorrichtung 1 dient dazu, bei Ausfall oder einer vorgebbaren Beeinträchtigung des ersten Energieversorgungssystems 17, vom ersten Energieversorgungssystem 17 auf das zweite Energieversorgungssystem 18 umzuschalten, und so die Versorgung der Last 23 sicher zu stellen. Das Umschalten kann dabei im Wesentlichen unterbrechungsfrei erfolgen, daher so schnell bzw. übergangslos, dass die Last 23 nicht abschaltet oder beschädigt wird.

Die Umschaltvorrichtung 1 ist bevorzugt ein Niederspannungsgerät.

Die Umschaltvorrichtung 1 weist zumindest eine erste Außenleiterstrecke 2 und eine zweite Außenleiterstrecke 5 auf, wobei auch eine höhere Anzahl Außenleiterstrecken vorgesehen sein kann, je nach der Verfügbarkeit alternativer Energieversorgungssysteme 17, 18. Im Regel-Betrieb ist vorgesehen, dass jeweils eine der Außenleiterstrecken 2, 5 mit einem der Energieversorgungssysteme 17, 18 schaltungstechnisch verbunden ist.

Die Außenleiterstrecken 2, 5 sind bevorzugt im Wesentlichen identisch aufgebaut.

Die dargestellten Umschaltvorrichtungen 1 zeigen jeweils nur die wenigstens zwei Außenleiterstrecken 2, 5. Darüber hinaus ist gemäß weiteren, nicht dargestellten Ausführungsformen einer gegenständlichen Umschaltvorrichtung 1 vorgesehen, dass die weiters auch wenigstens eine Neutralleiterstrecke aufweist. Insbesondere ist dabei vorgesehen, dass die Umschaltvorrichtung 1 je Außenleiterstrecke 2, 5 auch eine, dieser zugeordnete Neutralleiterstrecke aufweist. Besonders bevorzugt ist vorgesehen, dass die Neutralleiterstrecke(n) jeweils identisch zu den gegenständlich beschriebenen Außenleiterstrecken 2, 5 aufgebaut sind.

Dabei ist vorgesehen, dass in der ersten Außenleiterstrecke 2 ein erster mechanischer Bypassschalter 8 angeordnet ist. Eine erste Halbleiterschaltungsanordnung 11 der Umschaltvorrichtung 1 ist parallel zum ersten Bypassschalter 8 geschaltet.

Entsprechend ist in der zweiten Außenleiterstrecke 5 ein zweiter mechanischer Bypassschalter 14 angeordnet. Eine zweite Halbleiterschaltungsanordnung 15 der Umschaltvorrichtung 1 ist parallel zum zweiten Bypassschalter 14 geschaltet.

Gemäß einer bevorzugten Weiterbildung der Erfindung, und wie in den Fig. 1 und 2 dargestellt, ist weiters vorgesehen, dass in der ersten Außenleiterstrecke 2 eine erste Strommessanordnung 12 angeordnet ist, dass in der zweiten Außenleiterstrecke 5 eine zweite Strommessanordnung 16 angeordnet ist, dass die erste Strommessanordnung 12 zur Übertragung erster Strommesssignale mit der Steuereinheit 13 nachrichtentechnisch verbunden ist, und dass die zweite Strommessanordnung 16 zur Übertragung zweiter Strommesssignale mit der Steuereinheit 13 nachrichtentechnisch verbunden ist. Dadurch kann etwa ein Überstrom oder ein Kurzschlussstrom detektiert werden. Dadurch kann weiters sichergestellt werden, dass nach einem Umschalten vom ersten Außenleiter 2 auf den zweiten Außenleiter 5 tatsächlich kein Strom mehr über den ersten Außenleiter 2 fließt. Dies ist relevant dafür, wie der erste Außenleiter 2 abzuschalten ist.

Die Außenleiterstrecken 2, 5 arbeiten dabei entsprechend dem Prinzip einer sog. hybriden Schaltungsanordnung, wie diese etwa aus der WO 2015/028634 A1 bekannt sind. Die Halbleiterschaltungsanordnungen 11, 15 sind im Normalbetrieb nicht eingeschaltet und auch nicht stromdurchflossen. Diese werden lediglich während eines Schaltvorganges betrieben.

Gemäß den beiden dargestellten bevorzugten Ausführungsformen sind die Halbleiterschaltungsanordnungen 11, 15 umfassend sog. Back-to-Back IGBT 21 aufgebaut, wobei auch andere Leistungshalbleiter sowie andere Schaltkonzepte an dieser Stelle vorgesehen sein können.

Gemäß der bevorzugten Ausführungsform ist parallel zum ersten Bypassschalter 8 weiters ein erster Varistor 19 geschaltet. Parallel zum zweiten Bypassschalter 14 ist bevorzugt ein zweiter Varistor 20 geschaltet.

Die Umschaltvorrichtung 1 weist wenigstens eine elektronische Steuereinheit 13 auf, welche bevorzugt umfassend einen Mikrokontroller ausgebildet ist. Weiters weist die Umschaltvorrichtung 1 ein nicht dargestelltes Netzteil zur Versorgung der Steuereinheit 13 und allfälliger weiterer aktiver Komponenten auf.

Die Steuereinheit 13 ist dazu ausgebildet, den ersten Bypassschalter 8, die erste Halbleiterschaltungsanordnung 11, den zweiten Bypassschalter 14 und die zweite Halbleiterschaltungsanordnung 15 vorgebbar zu betätigen, daher ein- oder auszuschalten.

Die Umschaltvorrichtung 1 weist zumindest eine erste Messeinrichtung 31 zur Aufnahme einer ersten Spannung und/oder einer ersten Netzfrequenz auf, welche erste Messeinrichtung 31 mit der ersten Außenleiterstrecke 2 verbunden ist. Dabei ist insbesondere vorgesehen, dass die erste Messeinrichtung 31 als Voltmeter ausgebildet ist, welches schaltungstechnisch zwischen der ersten Außenleiterstrecke 2 und einem elektrischen Bezugspotential 33 angeordnet ist, wie dies etwa in den Fig. 1 und 2 dargestellt ist.

Die erste Messeinrichtung 31 ermittelt erste Spannungsmesssignale und/oder erste Netzfrequenzmesssignale und übermittelt diese an die Steuereinheit 13, mit welcher die erste Messeinrichtung 31 nachrichtentechnisch verbunden ist. Bevorzugt erfolgt diese Verbindung leitungsgebunden. Dabei kann etwa aus dem Verlauf der Spannungsmesssignale durch Zählen der Zeitabstände zwischen den Nulldurchgängen der Spannungsmesssignale auch direkt die Netzfrequenz ermittelt werden. Es hat sich gezeigt, dass die Spannung bzw. Netzspannung sowie die Frequenz bzw. Netzfrequenz gute Indikatoren für den Zustand einer elektrischen Wechselspannungsquelle sind.

Die Steuereinheit 13 vergleicht die ersten Spannungsmesssignale und/oder die ersten Netzfrequenzmesssignale mit wenigstens einem ersten Energieversorgungssystem-Wechselkriterium. Dadurch kann überwacht werden, ob von dem ersten Energieversorgungssystem 17 stabile elektrische Leistung an die Last 23 geliefert wird. Das Energieversorgungssystem-Wechselkriterium kann entsprechend den Anforderungen der Last 23 definiert werden oder in Hinblick auf übliche entsprechende Anforderungen bestimmter typischer Lasten 23. Weiters kann vorgesehen sein, dass das Energieversorgungssystem-Wechselkriterium neben der Höhe der Netzfrequenz und/oder der Höhe der Netzspannung weiters das Vorhandensein transienter Spannungen, einen Oberwellenanteil, die Verteilung der Oberwellen und/oder dergleichen umfassen kann. Die Steuereinheit 13 ist gegebenenfalls entsprechend auszubilden, um etwa die Verteilung der Oberwellen und dergleichen aus den gelieferten Messsignalen, etwa unter Durchführung einer Transformation, wie etwa einer FFT, zu ermitteln.

Wenn das erste Spannungsmesssignal und/oder das erste Netzfrequenzmesssignal das erste Energieversorgungssystem-Wechselkriterium erfüllt, schaltet die Steuereinheit 13 zuerst die erste Außenleiterstrecke 2 ab und im Wesentlichen unmittelbar nachfolgend bzw. anschließend die zweite Außenleiterstrecke 5 ein. Selbstverständlich kann das Energieversorgungssystem-Wechselkriterium auch derart formuliert sein, dass das entsprechende Umschalten dann erfolgt, wenn ein solches Kriterium nicht erfüllt wird.

Nachfolgend werden die typischen Schaltvorgänge beschrieben, wobei die Steuereinheit 13 entsprechend ausgebildet ist, diese Vorgänge zu steuern bzw. die entsprechenden Komponenten anzusteuern. Die Steuereinheit 13 kann beispielsweise mittels µP, µC bzw. FPGA einfach umgesetzt werden.

Wie bereits dargelegt, ist zum Umschalten von der ersten Außenleiterstrecke 2 auf die zweite Außenleiterstrecke 5 vorgesehen, dass die Steuereinheit 13 die erste Außenleiterstrecke 2 abschaltet und die zweite Außenleiterstrecke 5 unmittelbar danach einschaltet. Bei der Erfüllung des Energieversorgungssystem-Wechselkriteriums wird dabei zuerst der erste Bypassschalter 8 geöffnet und die erste Halbleiterschaltungsanordnung 11 eingeschaltet. Danach wird mit der ersten Halbleiterschaltungsanordnung 11 die erste Außenleiterstrecke 2 abgeschaltet. Unmittelbar danach wird die zweite Halbleiterschaltungsanordnung 15 und gleichzeitig damit der zweite Bypassschalter 14 eingeschaltet.

Als "unmittelbar" wird dabei verstanden, dass von der Steuereinheit 13 sofort, daher innerhalb einer möglichst geringen Anzahl an Prozesstakten, insbesondere mit dem nächsten Prozesstakt, nach dem Abschalten der ersten Außenleiterstrecke 2 der Einschaltbefehl an die zweite Außenleiterstrecke 5 ausgegeben wird. Insbesondere ist vorgesehen, dass der Einschaltbefehl weniger als 10 µs nach dem Abschalten der ersten Außenleiterstrecke 2 von der Steuereinheit abgegeben wird.

Der erste und der zweite Bypassschalter sind als elektromechanische Schalter ausgebildet. Insbesondere sind diese als sog. Hochgeschwindigkeitsschalter ausgebildet. Derartige Hochgeschwindigkeitsschalter können innerhalb einiger weniger 100 µs öffnen.

Wenngleich der zweite Bypassschalter 14 sehr schnell schalten, schaltet die zweite Halbleiterschaltungsanordnung 15, bei im Wesentlichen gleichzeitiger Ansteuerung erheblich schneller als die mechanischen Kontakte des zweiten Bypassschalters 14 und ist innerhalb einiger weniger Mikrosekunden voll leitfähig, sodass der Laststrom innerhalb dieser wenigen Mikrosekunden über die zweite Halbleiterschaltungsanordnung 15 fließen kann. Sobald die Kontakte des zweiten Bypassschalters 14 geschlossen sind, und auch kein Prellen der Kontakte mehr auftritt, dies kann nach Abwarten einer vorgebbaren Zeitspanne, etwa einige hundert Mikrosekunden, nach dem Schließbefehl angenommen werden, schaltet bevorzugt die Steuereinheit 13 die zweite Halbleiterschaltungsanordnung 15 ab. Der Strom fließt nun vom zweiten Energieversorgungssystem 18 über die geschlossenen mechanischen Schaltkontakte des zweiten Bypassschalters 14 unter Umgehung der zweiten Halbleiterschaltungsanordnung 15 zur Last 23. Alternativ kann auch vorgesehen sein, die zweite Halbleiterschaltungsanordnung 15 nicht auszuschalten, da der Übergangswiderstand des zweiten Bypassschalters 14 geringer ist, als der Widerstand der zweiten Halbleiterschaltungsanordnung 15.

Bevorzugt ist weiters vorgesehen, dass die Steuereinheit 13 dazu ausgebildet ist, zuerst die zweite Außenleiterstrecke (5) auszuschalten und unmittelbar anschließend die erste Außenleiterstrecke (2) einzuschalten, wenn das erste Energieversorgungssystem 17 wieder funktioniert. Dies kann etwa gegeben sein, wenn das erste Spannungsmesssignal und/oder das erste Netzfrequenzmesssignal ein zweites Energieversorgungssystem-Wechselkriterium erfüllt. Bevorzugt ist dabei vorgesehen, dass durch unterschiedliche erste und zweite Energieversorgungssystem-Wechselkriterien eine Schalthysterese gebildet wird, um unnötiges Hin- und Herschalten zwischen den beiden Energieversorgungssystemen 17, 18 zu vermeiden.

Bevorzugt und wie in den Fig. 1 und 2 dargestellt ist weiters vorgesehen, dass die Umschaltvorrichtung 1 eine zweite Messeinrichtung 32 zur Aufnahme einer zweiten Spannung und/oder einer zweiten Netzfrequenz aufweist, welche zweite Messeinrichtung 32 mit der zweiten Außenleiterstrecke 5 verbunden ist, und dass die zweite Messeinrichtung 32 zur Übertragung zweiter Spannungsmesssignale und/oder zweiter Netzfrequenzmesssignale mit der Steuereinheit 13 nachrichtentechnisch verbunden ist. Dadurch kann auch die Qualität des zweiten Energieversorgungssystems 18 überprüft werden. Insbesondere bei einer Erweiterung um ein drittes Energieversorgungssystem könnte dadurch auf dasjenige Energieversorgungssystem umgeschaltet werden, welches jeweils den Strom höchster Güte bereitstellt.

Wenngleich die erste und die zweite Außenleiterstrecke 2, 5 jeweils mechanische Kontakte in Form des ersten bzw. zweiten Bypassschalters 8, 14 aufweisen, ist bevorzugt vorgesehen, dass zwischen dem ersten Bypassschalter 8 und dem zweiten Bypassschalter 14 und der Last 23 bzw. einem Ausgang der Umschaltvorrichtung 1 zumindest ein erster mechanischer Trennschalter 9 zur Gewährleistung einer galvanischen Trennung angeordnet ist. Die Bypassschalter 8, 14 sind insbesondere hinsichtlich einer besonders schnellen Kontaktöffnung ausgelegt, nicht jedoch betreffend einem besonders großen Kontaktabstand. Durch den zumindest einen ersten mechanischen Trennschalter 9 kann die galvanische Trennung der Last 23 sichergestellt werden.

Die Ausführungsform gemäß Fig. 2 weist lediglich einen einzigen Trennschalter 9 auf. Die Ausführungsform gemäß Fig. 1 weist in der ersten Außenleiterstrecke 2 einen ersten Trennschalter 9 auf, sowie in der zweiten Außenleiterstrecke 5 einen zweiten Trennschalter 10 auf.

Es kann vorgesehen sein, dass die gegenständliche Umschaltvorrichtung 1 als eigenständiges Schaltgerät ausgebildet ist, welches in diesem Fall ein Gehäuse, sowie entsprechende Anschlussklemmen für die Last 23 und die Energieversorgungssysteme 17, 18 aufweist. Weiters ist bevorzugt wenigstens eine Kommunikationsschnittstelle vorgesehen, welche mit der Steuereinheit 13 verbunden ist.

Es kann auch vorgesehen sein, dass die Umschaltvorrichtung 1 integraler Teil einer sog. unterbrechungsfreien Stromversorgungsanlage ist. Besonders bevorzugt ist dabei vorgesehen, dass die Umschaltvorrichtung 1 eine Baugruppe mit einem Batteriespeichersystem bildet.

Zusätzlich zu den beschriebenen Umschaltfunktionen kann gemäß einer bevorzugten Weiterbildung vorgesehen sein, dass die Steuereinheit 13 ausgebildet ist, zur Begrenzung eines Einschaltstromes einer nachgeschalteten Last 23, bei geöffnetem Bypassschalter 8 die erste Halbleiterschaltungsanordnung 11 in Abhängigkeit eines gemessenen Laststromes vorgebbar getaktet, insbesondere zufolge einer Pulsweitenmodulation, Ein/Aus zu schalten. Dadurch kann etwa eine sog. Softstart-Funktion implementiert werden, um etwa einen Motor anzufahren.

Gemäß einer weiteren Ausführungsform ist bevorzugt vorgesehen, dass die Umschaltvorrichtung 1 weiters als Überstrom/Kurzschluss-Schutz funktioniert. Hiezu ist die Steuereinheit 13 dazu ausgebildet ist, die ersten und/oder zweiten Stromsignale mit wenigstens einem Überstrom- und/oder Kurzschlusskriterium zu vergleichen, wobei die Steuereinheit 13 weiters dazu ausgebildet ist,
- die erste Außenleiterstrecke 2 auszuschalten, wenn das erste Stromsignal das Überstrom- und/oder Kurzschlusskriterium erfüllt, und/oder
- die zweite Außenleiterstrecke 5 auszuschalten, wenn das zweite Stromsignal das Überstrom- und/oder Kurzschlusskriterium erfüllt.

Dadurch kann auch die Schutzfunktion voll in die Umschaltvorrichtung 1 integriert werden, und es ist kein weiterer Schutzschalter mehr erforderlich. Das Abschalten der jeweiligen Außenleiterstrecke 2, 5 erfolgt dabei zufolge des Schaltmusters, wie dies in der WO 2015/028634 A1 beschrieben ist.

## Patentansprüche

1. Umschaltvorrichtung (1) zum unterbrechungsfreien Umschalten zwischen zwei Energieversorgungssystemen (17, 18), wobei die Umschaltvorrichtung (1) zumindest eine erste Außenleiterstrecke (2) und eine zweite Außenleiterstrecke (5) aufweist, wobei in der ersten Außenleiterstrecke (2) ein erster mechanischer Bypassschalter (8) angeordnet ist, wobei eine erste Halbleiterschaltungsanordnung (11) der Umschaltvorrichtung (1) parallel zum ersten Bypassschalter (8) geschaltet ist, wobei die Umschaltvorrichtung (1) eine erste Messeinrichtung (31) zur Aufnahme einer ersten Spannung und/oder einer ersten Netzfrequenz aufweist, welche erste Messeinrichtung (31) mit der ersten Außenleiterstrecke (2) verbunden ist, wobei in der zweiten Außenleiterstrecke (5) ein zweiter mechanischer Bypassschalter (14) angeordnet ist, wobei eine zweite Halbleiterschaltungsanordnung (15) der Umschaltvorrichtung (1) parallel zum zweiten Bypassschalter (14) geschaltet ist, wobei eine elektronische Steuereinheit (13) der Umschaltvorrichtung (1) dazu ausgebildet ist, den ersten Bypassschalter (8), die erste Halbleiterschaltungsanordnung (11), den zweiten Bypassschalter (14) und die zweite Halbleiterschaltungsanordnung (15) vorgebbar zu betätigen, wobei die erste Messeinrichtung (31) zur Übertragung erster Spannungsmesssignale und/oder erster Netzfrequenzmesssignale mit der Steuereinheit (13) nachrichtentechnisch verbunden ist, wobei die Steuereinheit (13) dazu ausgebildet ist, die ersten Spannungsmesssignale und/oder die ersten Netzfrequenzmesssignale mit wenigstens einem ersten Energieversorgungssystem-Wechselkriterium zu vergleichen, wobei die Steuereinheit (13) weiters dazu ausgebildet ist, bei Erfüllung des ersten Energieversorgungssystem-Wechselkriteriums zuerst die erste Außenleiterstrecke (2) auszuschalten und unmittelbar anschließend die zweite Außenleiterstrecke (5) einzuschalten, wobei in der ersten Außenleiterstrecke (2) eine erste Strommessanordnung (12) angeordnet ist, wobei in der zweiten Außenleiterstrecke (5) eine zweite Strommessanordnung (16) angeordnet ist, wobei die erste Strommessanordnung (12) zur Übertragung erster Strommesssignale mit der Steuereinheit (13) nachrichtentechnisch verbunden ist, und wobei die zweite Strommessanordnung (16) zur Übertragung zweiter Strommesssignale mit der Steuereinheit (13) nachrichtentechnisch verbunden ist, **dadurch gekennzeichnet, dass** zwischen dem ersten Bypassschalter (8) und dem zweiten Bypassschalter (14) sowie einem Ausgang der Umschaltvorrichtung (1) zumindest ein erster mechanischer Trennschalter (9) zur Gewährleistung eines galvanischen Trennung angeordnet ist, und dass die Steuereinheit (13) dazu ausgebildet ist, die ersten und/oder zweiten Stromsignale mit wenigstens einem Überstrom- und/oder Kurzschlusskriterium zu vergleichen, wobei die Steuereinheit (13) weiters dazu ausgebildet ist,
- die erste Außenleiterstrecke (2) auszuschalten, wenn das erste Stromsignal das Überstrom- und/oder Kurzschlusskriterium erfüllt, und/oder
- die zweite Außenleiterstrecke (5) auszuschalten, wenn das zweite Stromsignal das Überstrom- und/oder Kurzschlusskriterium erfüllt,
und dass die Steuereinheit (13) ausgebildet ist, zur Begrenzung eines Einschaltstromes einer nachgeschalteten Last (23), bei geöffnetem Bypassschalter (8) die erste Halbleiterschaltungsanordnung (11) in Abhängigkeit eines gemessenen Laststromes vorgebbar getaktet, insbesondere zufolge einer Pulsweitenmodulation, Ein/Aus zu schalten.

2. Umschaltvorrichtung (1) nach Anspruch 1, wobei die Umschaltvorrichtung (1) eine zweite Messeinrichtung (32) zur Aufnahme einer zweiten Spannung und/oder einer zweiten Netzfrequenz aufweist, welche zweite Messeinrichtung (32) mit der zweiten Außenleiterstrecke (5) verbunden ist, und dass die zweite Messeinrichtung (32) zur Übertragung zweiter Spannungsmesssignale und/oder zweiter Netzfrequenzmesssignale mit der Steuereinheit (13) nachrichtentechnisch verbunden ist.

3. Umschaltvorrichtung (1) nach Anspruch 1 oder 2, wobei die Steuereinheit (13) dazu ausgebildet ist zum Einschalten der zweiten Außenleiterstrecke (5), gleichzeitig die zweite Halbleiterschaltungsanordnung (15) einzuschalten und den zweiten Bypassschalter (14) zu schließen, und vorzugsweise nachfolgend nach erfolgter Schließung des zweiten Bypassschalters (14) die zweite Halbleiterschaltungsanordnung (15) auszuschalten.

4. Umschaltvorrichtung (1) nach Anspruch 1, 2 oder 3, wobei , die Steuereinheit (13) dazu ausgebildet ist, zum Unterbrechen der ersten Außenleiterstrecke (2) den ersten Bypassschalter (8) zu öffnen.

5. Umschaltvorrichtung (1) nach einem der Ansprüche 1 bis 4, wobei die Steuereinheit (13) dazu ausgebildet ist, bei Erfüllung eines zweiten Energieversorgungssystem-Wechselkriteriums durch das erste Spannungsmesssignal und/oder das erste Netzfrequenzmesssignal, zuerst die zweite Außenleiterstrecke (5) auszuschalten und unmittelbar anschließend die erste Außenleiterstrecke (2) einzuschalten.

6. Unterbrechungsfreie Stromversorgungsanlage mit einer Umschaltvorrichtung (1) nach einem der Ansprüche 1 bis 5.

## Claims

1. A changeover apparatus (1) for uninterrupted changeover between two energy supply systems (17, 18), wherein the changeover apparatus (1) has at least a first external conductor section (2) and a second external conductor section (5), wherein a first mechanical bypass switch (8) is arranged in the first external conductor section (2), wherein a first semiconductor circuit arrangement (11) of the changeover apparatus (1) is connected in parallel with the first bypass switch (8), wherein the changeover apparatus (1) has a first measuring device (31) for recording a first voltage and/or a first network frequency, which first measuring device (31) is connected to the first external conductor section (2), wherein a second mechanical bypass switch (14) is arranged in the second external conductor section (5), wherein a second semiconductor circuit arrangement (15) of the changeover apparatus (1) is connected in parallel with the second bypass switch (14), wherein an electronic control unit (13) of the changeover apparatus (1) is designed to actuate the first bypass switch (8), the first semiconductor circuit arrangement (11), the second bypass switch (14) and the second semiconductor circuit arrangement (15) in a predeterminable manner, wherein the first measuring device (31) is connected for communication to the control unit (13) for transmitting first voltage measurement signals and/or first network frequency measurement signals, wherein the control unit (13) is designed to compare the first voltage measurement signals and/or the first network frequency measurement signals with at least one first energy supply system change criterion, wherein the control unit (13) is further designed to first deactivate the first external conductor section (2) and immediately thereafter activate the second external conductor section (5) when the first energy supply system change criterion is satisfied, wherein a first current-measuring arrangement (12) is arranged in the first external conductor section (2), wherein a second current-measuring arrangement (16) is arranged in the second external conductor section (5), wherein the first current-measuring arrangement (12) is connected for communication to the control unit (13) for transmitting first current measurement signals, and wherein the second current-measuring arrangement (16) is connected for communication to the control unit (13) for transmitting second current measurement signals, **characterized in that** at least one first mechanical isolating switch (9) is arranged between the first bypass switch (8) and the second bypass switch (14) and an output of the changeover apparatus (1) to ensure galvanic isolation, and that the control unit (13) is designed to compare the first and/or second current signals with at least one overcurrent and/or short-circuit criterion, wherein the control unit (13) is further designed
- to deactivate the first external conductor section (2) when the first current signal satisfies the overcurrent and/or short-circuit criterion, and/or
- to deactivate the second external conductor section (5) when the second current signal satisfies the overcurrent and/or short-circuit criterion,
and that the control unit (13) is designed, in order to limit an inrush current of a downstream load (23), when the bypass switch (8) is open, to activate/deactivate the first semiconductor circuit arrangement (11) in a predetermined clocked manner according to a measured load current, in particular as a result of pulse width modulation.

2. The changeover apparatus (1) according to claim 1, wherein the changeover apparatus (1) has a second measuring device (32) for recording a second voltage and/or a second network frequency, which second measuring device (32) is connected to the second external conductor section (5), and the second measuring device (32) is connected for communication to the control unit (13) for transmitting second voltage measurement signals and/or second network frequency measurement signals.

3. The changeover apparatus (1) according to claim 1 or 2, wherein the control unit (13) is designed to activate the second external conductor section (5), simultaneously activate the second semiconductor circuit arrangement (15) and close the second bypass switch (14), and preferably subsequently deactivate the second semiconductor circuit arrangement (15) after the second bypass switch (14) has been closed.

4. The changeover apparatus (1) according to claim 1, 2 or 3, wherein the control unit (13) is designed to open the first bypass switch (8) to interrupt the first external conductor section (2).

5. The changeover apparatus (1) according to any one of claims 1 to 4, wherein the control unit (13) is designed to first deactivate the second external conductor section (5) and immediately thereafter activate the first outer conductor section (2) when a second energy supply system change criterion is satisfied by the first voltage measurement signal and/or the first network frequency measurement signal.

6. An uninterruptible power supply system comprising a changeover apparatus (1) according to any one of claims 1 to 5.

## Revendications

1. Dispositif de commutation (1) permettant de commuter sans interruption entre deux systèmes d'alimentation en énergie (17, 18), dans lequel le dispositif de commutation (1) présente au moins une première section de conducteur externe (2) et une seconde section de conducteur externe (5), dans lequel dans la première section de conducteur externe (2) est situé un premier commutateur de dérivation (8) mécanique, dans lequel un premier agencement de circuit semi-conducteur (11) du dispositif de commutation (1) est connecté en parallèle au premier commutateur de dérivation (8), dans lequel le dispositif de commutation (1) comporte un premier dispositif de mesure (31) permettant d'enregistrer une première tension et/ou une première fréquence de réseau, dans lequel le premier dispositif de mesure (31) est connecté à la première section de conducteur externe (2), dans lequel dans la seconde section de conducteur externe (5) est situé un second commutateur de dérivation (14) mécanique, dans lequel un second agencement de circuit semi-conducteur (15) du dispositif de commutation (1) est connecté en parallèle au second commutateur de dérivation (14), dans lequel une unité de commande (13) électronique du dispositif de commutation (1) est conçue pour actionner de manière prédéterminée le premier commutateur de dérivation (8), le premier agencement de circuit semi-conducteur (11), le second commutateur de dérivation (14) et le second agencement de circuit semi-conducteur (15), dans lequel le premier dispositif de mesure (31) est connecté à l'unité de commande (13) selon la technique de communication pour transmettre des premiers signaux de mesure de tension et/ou des premiers signaux de mesure de fréquence de réseau, dans lequel l'unité de commande (13) est conçue pour comparer les premiers signaux de mesure de tension et/ou les premiers signaux de mesure de fréquence de réseau avec au moins un premier critère de changement du système d'alimentation en énergie, dans lequel l'unité de commande (13) est en outre conçue pour désactiver, lorsque le premier critère de changement du système d'alimentation en énergie est satisfait, d'abord la première section de conducteur externe (2), puis pour immédiatement activer la seconde section de conducteur externe (5), dans lequel dans la première section de conducteur externe (2) est disposé un premier agencement de mesure de courant (12), dans lequel dans la seconde section de conducteur externe (5) est disposé un second agencement de mesure de courant (16), dans lequel le premier agencement de mesure de courant (12) est connecté à l'unité de commande (13) selon la technique de communication pour transmettre des premiers signaux de mesure de courant, et dans lequel le second agencement de mesure de courant (16) est connecté à l'unité de commande (13) selon la technique de communication pour transmettre des seconds signaux de mesure de courant, **caractérisé en ce que**, entre le premier commutateur de dérivation (8) et le second commutateur de dérivation (14) ainsi qu'une sortie du dispositif de commutation (1), est disposé au moins un premier commutateur de sectionnement (9) mécanique pour assurer une séparation galvanique, et que l'unité de commande (13) est conçue pour comparer les premiers et/ou seconds signaux de courant avec au moins un critère de surintensité et/ou de court-circuit, dans lequel l'unité de commande (13) est en outre conçue,
- pour désactiver la première section de conducteur externe (2) lorsque le premier signal de courant satisfait au critère de surintensité et/ou de court-circuit, et/ou
- pour désactiver la seconde section de conducteur externe (5) lorsque le second signal de courant satisfait au critère de surintensité et/ou de court-circuit,
et que l'unité de commande (13) est conçue, pour limiter un courant transitoire d'une charge (23) en aval lorsque le commutateur de dérivation (8) est ouvert, pour activer/désactiver le premier agencement de circuit semi-conducteur (11), en fonction d'un courant de charge mesuré, cadencé de manière prédéterminée, en particulier selon une modulation d'amplitude d'impulsion.

2. Dispositif de commutation (1) selon la revendication 1, dans lequel le dispositif de commutation (1) comporte un second dispositif de mesure (32) destiné à l'enregistrement d'une seconde tension et/ou d'une seconde fréquence de réseau, dans lequel ledit second dispositif de mesure (32) est connecté à la seconde section de conducteur externe (5), et que le second dispositif de mesure (32) est connecté à l'unité de commande (13) selon la technique de communication pour transmettre des seconds signaux de mesure de tension et/ou des seconds signaux de mesure de fréquence de réseau.

3. Dispositif de commutation (1) selon la revendication 1 ou 2, dans lequel l'unité de commande (13) est conçue pour activer la seconde section de conducteur externe (5), pour activer simultanément le second agencement de circuit semi-conducteur (15) et pour désactiver le second commutateur de dérivation (14), et, de préférence après la fermeture effectuée du second commutateur de dérivation (14), pour désactiver le second agencement de circuit semi-conducteur (15).

4. Dispositif de commutation (1) selon la revendication 1, 2 ou 3, dans lequel l'unité de commande (13) est conçue pour ouvrir le premier commutateur de dérivation (8) pour interrompre la première section de conducteur externe (2).

5. Dispositif de commutation (1) selon l'une quelconque des revendications 1 à 4, dans lequel l'unité de commande (13) est conçue pour désactiver, lorsqu'un second critère de changement de système d'alimentation en énergie est satisfait par le premier signal de mesure de tension et/ou le premier signal de mesure de fréquence de réseau, d'abord la seconde section de conducteur externe (5) et pour immédiatement activer la première section de conducteur externe (2).

6. Système d'alimentation en énergie sans interruption comportant un dispositif de commutation (1) selon l'une quelconque des revendications 1 à 5.
